Europäisches Patentamt

European Patent Office

Office européen des brevets

(19)

(11) Veröffentlichungsnummer: **0 229 871**
B1

(12) EUROPÄISCHE PATENTSCHRIFT

(45) Veröffentlichungstag der Patentschrift:
26.04.89

(51) Int. Cl.⁴: **B60D 1/00**

(21) Anmeldenummer: 86111725.7

(22) Anmeldetag: 25.08.86

(54) Anhängevorrichtung, insbesondere für Personenkraftwagen.

(30) Priorität: 19.10.85 DE 3537305

(43) Veröffentlichungstag der Anmeldung:
29.07.87 Patentblatt 87/31

(45) Bekanntmachung des Hinweises auf die Patenterteilung:
26.04.89 Patentblatt 89/17

(84) Benannte Vertragsstaaten:
DE FR GB IT NL SE

(56) Entgegenhaltungen:
EP-A- 0 160 934
DE-A- 2 753 539
DE-A- 3 442 514

(73) Patentinhaber: Dr.Ing.h.c. F. Porsche
Aktiengesellschaft, Porschestrasse 42,
D-7000 Stuttgart 40(DE)

(72) Erfinder: Krügle, Reinhard, Kirchbergstrasse 45,
D-7251 Flacht(DE)

**Beschreibung**

Die Erfindung bezieht sich auf eine Anhängevorrichtung, insbesondere für Personenkraftwagen, die einen abnehmbaren Kugelhals mit Kugelkopf umfaßt, wobei der Kugelhals in eine aufbauseitig befestigte Führungshülse einsteckbar und in dieser mittels einer Verriegelungsvorrichtung arretierbar ist und die Führungshülse zumindest abschnittsweise verdeckt hinter einem Stoßfänger angeordnet ist.

Bei einer bekannten Anhängevorrichtung der eingangs genannten Gattung (DE-C 2 935 474) wird die Verriegelungsvorrichtung durch einen Schraubbolzen gebildet, der mittels eines endseitigen Griffabschnitts von der Unterseite des Stoßfängers her in eine Gewindebohrung des Kugelhalses eingedreht wird. Ein oberes konusförmiges Ende des Schraubbolzens wirkt unter Vermittlung kurzer Stössel auf in radiale Bohrungen eingesetzte Kugeln ein, die dadurch in entsprechende Aussparungen der Führungshülse eingreifen.

Dieser Anordnung haftet der Nachteil an, daß der abnehmbare Kugelhals von Unbefugten ohne besondere Anstrengungen entfernt werden kann. Darüber hinaus ist die Montage des Kugelhalses schwierig, da vor dem Einführen des Kugelhalses in die Führungshülse die Kugeln bzw. die Stössel von Hand gegen Herausfallen gesichert werden müssen, was aufgrund der dort herrschenden beengten Platzverhältnisse (Stoßfänger) mühsam und zeitaufwendig ist. Ferner ist der vorstehende Griffabschnitt des Schraubenbolzens im Fahrbetrieb starker Verschmutzung ausgesetzt.

Aufgabe der Erfindung ist es, an einer Anhängevorrichtung solche Vorkehrungen zu treffen, daß bei guter Funktion eine bedienungsfreundliche Montage des Kugelhalses sichergestellt ist und der Kugelhals in seiner Gebrauchsstellung gegen Diebstahl geschützt ist.

Erfindungsgemäß wird diese Aufgabe durch die kennzeichnenden Merkmale des Anspruchs 1 gelöst. Weitere, die Erfindung in vorteilhafter Weise ausgestaltende Merkmale beinhalten die Unteransprüche.

Die mit der Erfindung hauptsächlich erzielten Vorteile sind darin zu sehen, daß durch die Ausbildung und die Lage der Verriegelungsvorrichtung einerseits eine einfache, bedienungsfreundliche Montage und andererseits ein zuverlässiger Diebstahlschutz für den in Gebrauchsstellung befindlichen Kugelhals gewährleistet ist. Die Verriegelungsvorrichtung des Kugelhalses ist ausschließlich von einem verschließbaren Karosserieraum aus zugänglich, wodurch eine Betätigung durch Unbefugte verhindert wird. Zur Montage bzw. Demontage des Kugelhalses wird bei geöffneter Klappe des Kofferraums ein Hilfswerkzeug durch eine Führungseinrichtung der Aufbaustruktur hindurchgeführt und die Befestigungsschraube betätigt.

Die Verriegelungsvorrichtung besteht aus wenigen, leicht herzustellenden Bauteilen. Durch die konische Ausbildung der Führungshülse bzw. des Kugelhalses, die axiale Festlegung der Befestigungsschraube und die Verdrehsicherung wird der Kugelhals bei der Demontage selbsttätig nach unten bewegt. Bei abgenommenem Kugelhals wird ein schwenkbarer Abschnitt des Stoßfängers nach oben in eine Verriegelungsstellung geschwenkt, so daß kein Schmutz zur Verriegelungsvorrichtung gelangen kann.

Ein Ausführungsbeispiel der Erfindung ist in der Zeichnung dargestellt und wird im folgenden näher beschrieben.

Es zeigt

Fig. 1 einen Teilschnitt in einer Fahrzeuglängsebene durch eine erfindungsgemäß aufgebaute Anhängevorrichtung,

Fig. 2 einen Schnitt nach der Linie II–II der Fig. 1,

Fig. 3 eine Ansicht in Pfeilrichtung S der Fig. 2.

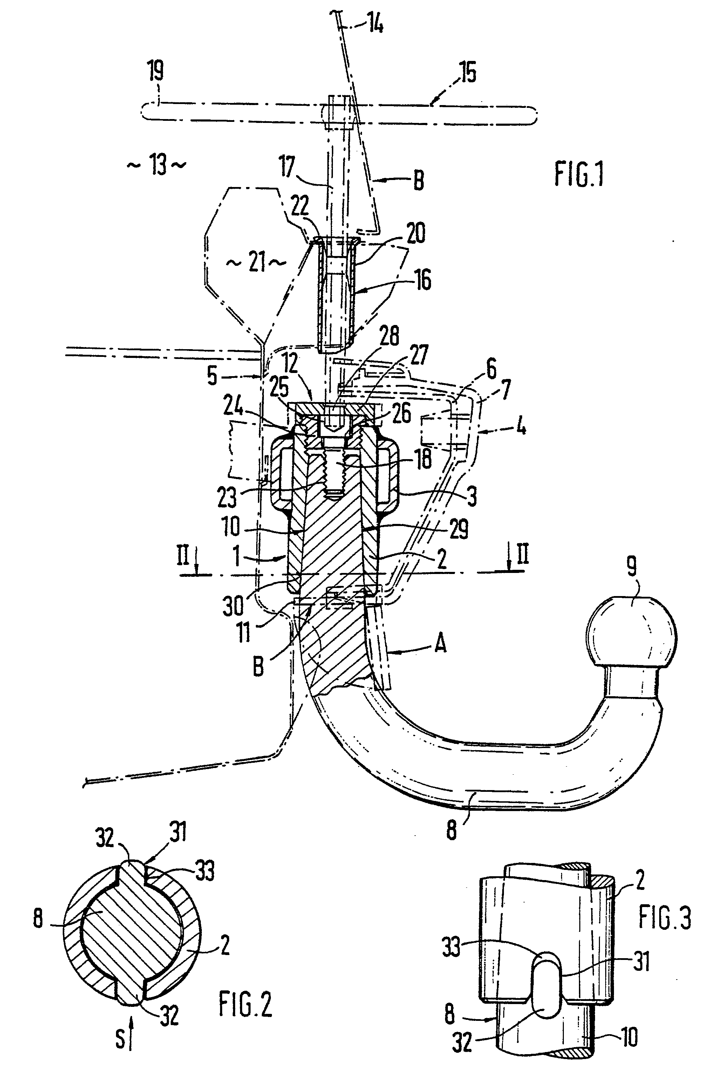

Die in Fig. 1 dargestellte Anhängevorrichtung 1 weist eine etwa vertikal verlaufende Führungshülse 2 auf, die beispielsweise über eine Schweißverbindung an einem feststehenden Querträger 3 befestigt ist. Der Querträger 3 ist verdeckt hinter einem Stoßfänger 4 angeordnet, der unter Vermittlung von nicht näher dargestellten Halteelementen an einer Aufbaustruktur 5 in Lage gehalten ist.

Der in einem Heckbereich eines Kraftfahrzeuges angeordnete Stoßfänger 4 besteht aus einem formsteifen Trägerteil 6 und einer, aus elastischem Kunststoff gefertigten Abdeckung 7, die durch Klipsen mit dem Trägerteil 6 verbunden ist.

Die Führungshülse 2 dient zur Aufnahme eines abnehmbaren Kugelhalses 8 mit Kugelkopf 9, wobei der Kugelhals 8 zum Einführen in die Führungshülse 2 einen entsprechend abgewinkelten Bereich 10 aufweist. Der Kugelhals 8 wird nach Verschwenken eines Abschnittes 11 der Abdeckung 7 in eine Freigabestellung A von unten in die Führungshülse 2 eingesteckt und in dieser mittels einer Verriegelungsvorrichtung 12 arretiert. Bei abgenommenem Führungshals 8 wird der Abschnitt 11 nach oben in eine etwa horizontal verlaufende Verriegelungsstellung B verschwenkt.

Damit der Kugelhals 8 nicht von unbefugten Personen entfernt werden kann, ist die Verriegelungsvorrichtung 12 ausschließlich von einem verschließbaren Karosserieraum 13 aus zugänglich. Der Karosserieraum 13 wird im Ausführungsbeispiel durch einen heckseitig angeordneten Kofferraum gebildet, der mit einer schwenkbaren und verschließbaren Klappe 14 versehen ist. In Fig. 1 nimmt die Klappe 14 ihre Schließstellung B ein.

Zur Betätigung der Verriegelungsvorrichtung 12 dient ein Hilfswerkzeug 15, das über eine in die Aufbaustruktur 5 integrierte Führungseinrichtung 16 hindurchgeführt wird. Als Hilfswerkzeug 15 ist ein Sechskantdorn 17 vorgesehen, der mit seinem freien Ende mit einer Befestigungsschraube 18 der Verriegelungsvorrichtung 12 zusammenwirkt. Die Befestigungsschraube 18 ist gemäß Fig. 1 als Innensechskantschraube ausgebildet. Das andere Ende des Sechskantdornes 17 ist mit einem Quergriff 19 versehen.

Die Führungseinrichtung 16 wird durch einen rohrartigen Stutzen 20 gebildet, der an seinen beiden Enden offen ist und der durch einen kastenförmigen Querträger 21 der Aufbaustruktur 5 hindurchgeführt ist. Der Stutzen 20 ist etwa vertikal ausgerichtet und stützt sich mit einem endseitigen Kragen 22 an der Oberseite des Querträgers 21 ab. Die Mittellinie des Stutzens 20 und die Mittellinie der darunterliegenden Führungshülse 2 verlaufen koaxial zueinander.

Die Befestigungsschraube 18 der Verriegelungsvorrichtung 12 wird von oben in eine Gewindebohrung 23 des Kugelhalses 8 eingesetzt und stützt sich an einer Mutter 24 ab, die oberhalb des Kugelhalses 8 angeordnet und fest mit der Führungshülse 2 verbunden ist (beispielsweise durch Schrauben). Die Befestigungsschraube 18 ist in axialer Richtung nur um einen geringen Betrag verschiebbar, da der Schraubenkopf 25 einerseits durch einen zylindrischen Aufnahmeabschnitt 26 der Mutter 24 und andererseits durch einen auf die Mutter 24 ausgeschraubten Deckel 27 fixiert ist. Der Deckel 27 weist eine Öffnung 28 zum Durchführen des Hilfswerkzeuges 15 auf. Der Durchmesser der Öffnung 28 ist kleiner als der Außendurchmesser des Schraubenkopfes 25.

Der Aufnahmeabschnitt 26 hat eine solche Tiefe, daß die obere Kante des Schraubenkopfes 25 etwa bündig mit der oberen Begrenzungsfläche der Mutter 24 verläuft.

Zum leichteren Einführen des Kugelhalses 8 in die Führungshülse 2 weist der Kugelhals 8 auf seiner Außenseite eine konische Fläche 29 auf, die mit einer ebenfalls konisch ausgebildeten Fläche 30 der Führungshülse 2 zusammenwirkt. Der kleinste Durchmesser der konischen Fläche 29 des Kugelhalses 8 ist an dessen oberem Ende vorgesehen.

Die Verriegelungsvorrichtung 12 umfaßt eine Verdrehsicherung 31, die durch formschlüssiges Zusammenwirken des Kugelhalses 8 und der Führungshülse 2 gebildet wird. Gemäß den Fig. 2 und 3 sind am Kugelhals 8 zumindest zwei diametral gegenüberliegende Anformungen 32 vorgesehen, die in Gebrauchsstellung der Anhängevorrichtung 1 in korrespondierende, nach unten hin offene Führungsschlitze 33 der Führungshülse 2 eingreifen. Die Anformungen 32 sind entweder angegossen oder angeschmiedet.

Im Ausführungsbeispiel erfolgt die Arretierung des Kugelhalses 8 in der Führungshülse 2 durch Rechtsdrehung des Hilfswerkzeuges 15, wogegen die Demontage des Kugelhalses 8 durch Linksdrehung des Hilfswerkzeuges erfolgt. Durch die axiale Festlegung der Befestigungsschraube 18, die konische Ausbildung von Kugelhals 8 und Führungshülse 2 sowie durch die Verdrehsicherung 31 bewegt sich der Kugelhals 8 bei der Demontage selbsttätig nach unten.

## Patentansprüche

1. Anhängevorrichtung, insbesondere für Personenkraftwagen, die einen abnehmbaren Kugelhals (8) mit Kugelkopf (9) umfaßt, wobei der Kugelhals in eine aufbauseitig befestigte Führungshülse (2) einsteckbar und in dieser mittels einer Verriegelungsvorrichtung (12) arretierbar ist und die Führungshülse zumindest abschnittsweise verdeckt hinter einem Stoßfänger (4) angeordnet ist, dadurch gekennzeichnet, daß die Verriegelungsvorrichtung (12) von einem verschließbaren Karosserieraum (13) aus zugänglich ist, und daß die Verriegelungsvorrichtung (12) mittels einem vorzugsweise mit einer Führungseinrichtung (16) zusammenwirkenden Hilfswerkzeug betätigbar ist.

2. Anhängevorrichtung nach Anspruch 1, dadurch gekennzeichnet, daß der verschließbare Karosserieraum (13) ein Kofferraum ist, der eine schwenkbare Klappe (14) aufweist.

3. Anhängevorrichtung nach Anspruch 1, dadurch gekennzeichnet, daß als Führungseinrichtung (16) ein rohrartiger Stutzen (20) dient, der durch einen Querträger (21) der Aufbaustruktur (5) hindurchgeführt ist.

4. Anhängevorrichtung nach Anspruch 3, dadurch gekennzeichnet, daß der Stutzen (20) etwa vertikal ausgerichtet ist und sich mit einem endseitigen Kragen (22) an der Oberseite des Querträgers (21) abstützt.

5. Anhängevorrichtung nach Anspruch 1, dadurch gekennzeichnet, daß die Verriegelungsvorrichtung (12) eine Befestigungsschraube (18) umfaßt, die von oben in eine Gewindebohrung (23) des Kugelhalses (18) eingedreht ist, wobei sich die Befestigungsschraube (18) an einer mit der Führungshülse (2) zusammenwirkenden Mutter (24) abstützt.

6. Anhängevorrichtung nach Anspruch 5, dadurch gekennzeichnet, daß die Befestigungsschraube (18) durch eine Innensechskantschraube dargestellt ist.

7. Anhängevorrichtung nach Anspruch 5, dadurch gekennzeichnet, daß die Befestigungsschraube (18) in axialer Richtung einerseits durch die Mutter (24) und andererseits durch einen auf die Mutter (24) aufgeschraubten Deckel (27) fixiert ist, wobei eine am Deckel (27) vorgesehene Öffnung (28) für das Hilfswerkzeug (15) einen kleineren Durchmesser aufweist als der Außendurchmesser des Schraubenkopfes (25).

8. Anhängevorrichtung nach Anspruch 1, dadurch gekennzeichnet, daß der Kugelhals (8) an seiner Außenseite eine konische Fläche (29) aufweist, die mit einer korrespondierenden Fläche (30) der Führungshülse zusammenwirkt.

9. Anhängevorrichtung nach Anspruch 1, dadurch gekennzeichnet, daß die Verriegelungsvorrichtung (12) eine Verdrehsicherung umfaßt, die durch formschlüssiges Zusammenwirken des Kugelhalses (8) und der Führungshülse (2) gebildet wird.

10. Anhängevorrichtung nach Anspruch 9, dadurch gekennzeichnet, daß am Kugelhals (8) zumindest zwei diametral gegenüberliegende Anformungen (32) vorgesehen sind, die in Gebrauchsstellung der Anhängevorrichtung (1) in korrespondierende, nach unten hin offene Führungsschlitze (33) der Führungshülse (2) eingreifen.

## Claims

1. A tow bar, in particular for passenger motor vehicles, comprising a detachable ball neck (8) with a ball head (9), the ball neck being insertable in a guide sleeve (2) fixed to the car body and being lockable therein by means of a locking device (12), and the guide sleeve being so arranged that at least a portion thereof is hidden behind a bumper (4), characterized in that the locking device (12) is accessible from a lockable chamber (13) in the car body, and in that the locking device (12) is actuatable by means of an auxiliary tool preferably cooperating with a guide device (16).

2. A tow bar according to claim 1, characterized in that the lockable chamber (13) in the car body is a boot having a pivotable flap (14).

3. A tow bar according to claim 1, characterized in that a tubular socket (20), which is guided through a transverse support (21) of the structure (5), acts as a guide device (16).

4. A tow bar according to claim 3, characterized in that the socket (20) is aligned approximately vertically and a collar (22) on its end bears against the upper side of the transverse support (21).

5. A tow bar according to claim 1, characterized in that the locking device (12) comprises a fixing screw (18) screwed from above into a threaded bore (23) of the ball neck (18), the fixing screw (18) bearing against a nut (24) co-operating with the guide sleeve (2).

6. A tow bar according to claim 5, characterized in that the fixing screw (18) is a hexagon socket screw.

7. A tow bar according to claim 5, characterized in that the fixing screw (18) is fixed in the axial direction by the nut (24) on the one hand and by a cover (27) screwed on to the nut (24) on the other hand, an aperture (28) on the cover (27) having a smaller diameter for the auxiliary tool (15) than the outer diameter of the screw head (25).

8. A tow bar according to claim 1, characterized in that the ball neck (8) has a conical face (29) on its exterior which cooperates with a corresponding face (30) of the guide sleeve.

9. A tow bar according to claim 1, characterized in that the locking device (12) comprises an anti-rotation device formed by the positively locking co-operation of the ball neck (8) and the guide sleeve (2).

10. A tow bar according to claim 9, characterized in that at least two diametrically opposed formations (32) are provided on the ball neck (8), the said projections engaging, in the operational position of the tow bar (1), in corresponding guide slots (33) of the guide sleeve (2), the said guide slots being open at the bottom.

## Revendications

1. Dispositif d'attelage, en particulier pour voitures automobiles, comprenant une tige à boule (8) amovible, avec une tête sphérique (9) dans lequel la tige à boule peut être enfichée dans une douille de guidage (2) fixée du côté de la carrosserie et immobilisée dans celle-ci au moyen d'un système de verrouillage (12), ladite douille de guidage étant disposée, masquée au moins partiellement, derrière un pare-chocs, caractérisé par le fait que le système de verrouillage (12) est accessible à partir d'un espace intérieur de la carrosserie (13) pouvant être fermé à clef, et que le système de verrouillage (12) peut être manœuvré au moyen d'un outil spécial utilisé de préférence conjointement avec un élément de guidage (16).

2. Dispositif d'attelage selon la revendication 1, caractérisé par le fait que l'espace intérieur de la carrosserie (13) pouvant être fermé à clef, est un coffre à bagages muni d'une porte basculante (14).

3. Dispositif d'attelage selon la revendication 1, caractérisé par le fait que, en tant qu'élément de guidage (16), on utilise un manchon de forme tubulaire (20) qui passe à travers une traverse (21) de la structure carrosserie (5).

4. Dispositif d'attelage selon la revendication 3, caractérisé par le fait que le manchon (20) est disposé à peu près verticalement par un rebord (22) prévu à l'une de ses extrémités il prend appui sur la face supérieure de la traverse (21).

5. Dispositif d'attelage selon la revendication 1, caractérisé par le fait que le système de verrouillage (12) comprend une vis de fixation (18) qui se visse par le haut dans un trou fileté (23) prévu dans la tige à boule (8), ladite vis de fixation (18) prenant appui contre un écrou (24) associé à la douille de guidage (2).

6. Dispositif d'attelage selon la revendication 5, caractérisé par le fait que la vis de fixation (18) est constituée par une vis avec une tête à six pans creux.

7. Dispositif d'attelage selon la revendication 5, caractérisé par le fait que la vis de fixation (18) est immobilisée dans le sens axial d'une part par l'écrou (24) et d'autre part par un chapeau (27) vissé sur l'écrou (24), l'orifice (28) prévu dans le chapeau perforé (27), pour le passage de l'outil spécial (15) ayant un diamètre inférieur au diamètre extérieur de la tête de vis (25).

8. Dispositif d'attelage selon la revendication 1, caractérisé par le fait que la tige à boule (8) présente extérieurement une surface conique (29) qui s'adapte à une surface correspondante (30) de la douille de guidage.

9. Dispositif d'attelage selon la revendication 9, caractérisé par le fait que le système de verrouillage (12) comprend un système d'immobilisation en rotation, réalisé par conjugaison des formes entre la tige à boule (8) et la douille de guidage (2).

10. Dispositif d'attelage selon la revendication 9, caractérisé par le fait que sur la tige à boule (8) il est prévu au moins deux éléments en saillie diamétralement opposés (32) qui, en position d'utilisation du dispositif d'attelage (1) s'engageant dans les fentes de guidage correspondantes (33), ouvertes vers le bas, prévues dans la douille de guidage (2).

EP 0 229 871 B1

FIG.1

FIG.2

FIG.3